# EUROPÄISCHE PATENTSCHRIFT

(11) **EP 0 642 955 B1**
(45) Veröffentlichungstag und Bekanntmachung des Hinweises auf die Patenterteilung: **17.12.1997**
(21) Anmeldenummer: 94112623.7
(22) Anmeldetag: 12.08.1994
(51) Int. Cl.: B60R 21/06

(54) **Rückhaltevorrichtung**
Restraining device
Installation de retenue

(30) Priorität: 15.09.1993 DE 4331278
(43) Veröffentlichungstag der Anmeldung: 15.03.1995
(73) Patentinhaber: Ieper Industries N.V., B-8900 Ieper (BE)
(72) Erfinder: Labeur, Lucas, B-3010 Leuven (BE); Crisp, Sam T., B-3140 Keerbergen (BE)
(74) Vertreter: Weber, Dieter, Dr.

(56) Entgegenhaltungen:
- DE-A- 2 749 560
- DE-A- 4 010 209
- GB-A- 2 111 439

## Beschreibung

Die vorliegende Erfindung betrifft eine Rückhaltevorrichtung für in einem Fahrzeug lose verstaute Gegenstände, bestehend aus einem Gitter- oder Netzelement, welches eine Rückhaltefläche definiert, sowie aus Befestigungseinrichtungen für dieses Netz- oder Gitterelement an dem Fahrzeug, wobei ein einer Zugspannung aussetzbares, mindestens teilweise durch die Befestigungseinrichtungen geführtes, flexibles und im wesentlichen lineares Spannelement sowie eine Zugspannungseinrichtung vorgesehen sind.

Eine solche Vorrichtung ist zum Beispiel aus der Patentanmeldung GB-A-2 111 439 bekannt. Bei dieser bekannten Rückhaltevorrichtung ist das Netz an drei seiner vier umlaufenden Seitenkanten mit einem im wesentlichen nicht streckbaren Seil versehen, das an den Ecken des Netzes durch elastische Schlaufen gehalten wird. Die Länge dieses Seiles ist auf einer Seite verstellbar. Die vierte Seitenkante wird von einem elastisch streckbaren Seil gebildet, an dessen Enden Befestigungseinrichtungen, wie zum Beispiel Haken zum Einhängen, vorgesehen sind.

Dabei wird die Spannung in dem umlaufenden nicht elastischen Seil sowie in dem elastischen Seil im wesentlichen dadurch erzeugt, daß beim Befestigen des elastischen Seiles dasselbe gespannt werden muß. Dabei liefern auch die elastischen Spannelemente oder Schauten an dem von dem nicht dehnbaren Seil gebildeten Netzecken einen Teil der Spannkraft.

Diese Vorrichtung entspricht im wesentlichen auch anderen bekannten Rückhaltevorrichtungen mit Netzen, die in ihrer äußeren Form näherungsweise dem Innenquerschnitt eines Kraftfahrzeuges angepaßt sind und die mit ihrem äußeren Rand an an Holmen, Dach und anderen Karosserie- oder Einbauteilen angebrachten Haken eingehängt werden und so beispielsweise einen hinteren Raum des Fahrzeuges von dem vorderen Raum abteilen. Häufig findet man derartige Netze an sog. Kombifahrzeugen, bei welchen der hintere Gepäckraum oberhalb der Rücksitzlehne durch ein derartiges Netz abgetrennt wird. Solche Netze taugen jedoch allenfalls dazu, Haustiere, wie z.B. Hunde, daran zu hindern, aus dem hinteren Gepäckraum auf die Sitze zu springen, oder auch um lose verstaute Waren daran zu hindern, über die Lehne des Rücksitzes auf den Rücksitz herabzurutschen oder zu fallen, und zwar bei normalen Betriebszuständen.

Bei einem Unfall jedoch, insbesondere bei Auffahrunfällen, können im hinteren Gepäckraum oder auch auf Hutablagen und dergleichen lose verstaute Gegenstände mit einer außerordentlich großen Geschwindigkeit und Wucht durch den Innenraum des Fahrzeuges nach vorn fliegen, wobei die vorgenannten herkömmlichen Netze viel zu nachgiebig und weich sind, als daß sie derartigen, mit großer Wucht nach vorn geschleuderten Gegenständen einen hinreichenden Widerstand bieten könnten. Selbst wenn derartige Netze nicht reißen oder von ihren Befestigungshaken losgerissen werden, so können sie sich dennoch unter der Wucht eines aufprallenden Gegenstandes soweit ausbeulen, daß eine ganz erhebliche Verletzungsgefahr für die Insassen des Fahrzeuges durch die nach vorn geschleuderten Gegenstände besteht. Dies hängt unter anderem damit zusammen, daß die elastischen Spannelemente, wie zum Beispiel elastische Schlaufen an den Ecken des Netzes und ein elastisches Seil entlang einer Kante des Netzes, wie im Falle der GB-A-2 111 439, diese Elemente allein durch manuelles Strecken und Einhängen an entsprechenden Befestigungsteilen gespannt werden und deshalb keine sehr hohe Spannkraft erzeugen, welche den bei einem Unfall auftretenden und von durch das Netz zurückgehaltenen Gegenständen hervorgerufenen Kräften widerstehen könnte.

Daneben sind auch metallische Gitter oder Verstrebungen bekannt, die anstelle der vorerwähnten Netze in Fahrzeuge eingebaut werden können, jedoch haben diese oft den Nachteil einer zeitaufwendigen und umständlichen Montage, so daß sie im allgemeinen fest installiert bleiben, selbst wenn sie überhaupt nicht benötigt werden. Sie lassen sich auch nicht platzsparend verstauen.

Gegenüber diesem Stand der Technik liegt der vorliegenden Erfindung die Aufgabe zugrunde, eine Rückhaltevorrichtung mit den eingangs genannten Merkmalen zu schaffen, welche einerseits einfach montierbar und demontierbar, leicht zu handhaben und auch leicht verstaubar ist und andererseits gegenüber den bekannten, flexiblen Netzen eine geringere Nachgiebigkeit und erheblich verbesserte Sicherheit insbesondere bei Unfällen bietet.

Diese Aufgabe wird gemäß der vorliegenden Erfindung dadurch gelöst, daß an dem Spannelement Halterungen für das Netz- bzw. Gitterelement angebracht sind, wobei mit Hilfe der Zugspannungseinrichtung die Zugspannung in dem Spannelement auf einen gewünschten Wert gesteigert oder, z.B. zwecks Demontage, vermindert werden kann.

Demnach wird also das Netz nicht einfach mit seinem Außenrand oder einer äußeren, umlaufenden Einfassung in Haken eingehängt, sondern es ist über spezielle Halterungen an einem linearen Spannelement befestigt, welches seinerseits an bzw. durch die Befestigungseinrichtungen geführt ist und welches nach dem Anbringen an den Befestigungseinrichtungen nachträglich noch gespannt werden kann, so daß durch die straffe Spannung des Spannelementes und auch des Netzes oder Gitterwerkes, welches über die Netzhalterungen an dem Spannelement befestigt ist, die gesamte Rückhaltevorrichtung wesentlich straffer und unnachgiebiger wird und auch im Falle eines Unfalles durch das Fahrzeug hindurchfliegende Gegenstände sicher und ohne Verletzungsgefahr für die Fahrzeuginsassen zurückhält. Bei herkömmlichen Netzen war, selbst wenn sie aus einem mehr oder weniger elastischen Material bestanden, die Erzeugung einer derartigen straffen Zugspannung nicht möglich, da ja das Netz von Hand an seinem Rand in entsprechende Befestigungshaken oder dergleichen eingehängt werden mußte. Die von Hand auszuübenden Kräfte sind jedoch zu gering, als daß damit eine hinreichend große Zugkraft im Rand des Netzes oder im Netz selbst erzeugt werden konnte, die ausgereicht hätte, um Sicherheit gegen bei Unfällen nach vorn katapultierte Gegenstände zu bieten. Das nachträgliche Spannen jedoch, welches mit Hilfe einer Spannvorrichtung gemäß der vorliegenden Erfindung auch nach dem Verankern des Netzes und/oder des Spannungselementes an den Befestigungspunkten noch möglich ist, läßt auch das Aufbringen wesentlich höherer Zugspannungen zu, so daß man einen Netz- oder Gitteraufbau mit einer erheblich festeren Struktur erhalten kann. Es versteht sich, daß dementsprechend auch das Netzmaterial selbst fester, steifer und weniger nachgiebig ausgeführt werden kann, da es nicht mehr von Hand in seine endgültige Befestigungsposition gebracht werden muß. Dennoch kann das Netz oder Gitter hinreichend flexibel gestaltet werden, um leicht demontiert und verstaut werden zu können.

Bevorzugt ist eine Ausführungsform der Erfindung, bei welcher das Spannungselement in Längsrichtung zu den Netzhalterungen beweglich ist. Damit kann je nach Elastizität des Spannungselementes, erforderlichenfalls auch ein größerer Abschnitt desselben entlang der Netzhalterungen bewegt werden, um z.B. in einer Zugspannungsvorrichtung aufgenommen zu werden, wobei sich die Zugspannung in dem Spannungselement erhöht, ohne daß sich die Position des Netzes und der Netzhalterungen verändern muß. Im übrigen wird im folgenden ohne Beschränkungsabsicht das gitterartige oder netzartige Element, welches die Auffangfläche für Gegenstände bildet, ausschließlich als ''Netz'' angesprochen, wobei es sich versteht, daß ein solches Netz auch gitterartige starre Flächen oder Abschnitte aufweisen kann.

In der bevorzugten Ausführungsform der Erfindung haben weiterhin die Netzhalterungen rohrförmige Führungsöffnungen, in welchen das Spannungselement aufgenommen ist und in welchen es in Längsrichtung gleiten kann.

Gemäß einer ersten Variante der Erfindung ist als Zugspannungsvorrichtung eine Wickeleinrichtung mit Ratschenmechanismus vorgesehen. Dabei kann eines der Enden des Spannungselementes in der Nähe der Wickelvorrichtung fixiert sein, während das andere auf diese Wickeleinrichtung aufgewickelt wird, z.B. auf eine Wickeltrommel und mit Hilfe einer Kurbel, wobei ein Ratschenmechanismus das Lösen und Rückwärtsdrehen der Aufwickeltrommel verhindert. Selbstverständlich kann der betreffende Ratschenmechanismus auch außer Eingriff gebracht werden, um gegebenenfalls die Zugspannung in dem Spannungselement wieder reduzieren zu können, beispielsweise bei der Demontage der Rückhaltevorrichtung.

Zweckmäßig erscheint es weiterhin, wenn das Spannungselement zumindest überwiegend entlang der Außenkonturen des Netzes bzw. Netzelementes verläuft. Letzteres ist im allgemeinen so geformt, daß es zumindest in dem durch das Spannungselement aufgespannten Zustand den freien Querschnitt eines Fahrzeuges, z.B. über der Rücksitzlehne eines Caravans bzw. Kombifahrzeuges, abdeckt, möglicherweise abgesehen von schwer zugänglichen Randbereichen und Rundungen. Das Zugspannungselement verläuft dann ebenfalls entlang dieser Außenkontur und bildet sozusagen einen Spannrahmen für das Netz, dessen Festigkeit und Steifigkeit durch Erhöhen der Spannung verbessert wird. Im allgemeinen hat das Spannungselement bzw. die Außenkontur des Netzes einen im wesentlichen trapezförmigen Verlauf, wobei die kürzere der parallelen Seiten dieses Trapezes im allgemeinen entlang des Fahrzeugdaches verläuft, die schräg geneigten Seitenkanten parallel zu den Fenstern bzw. Fensterholmen verlaufen und die längere der parallelen Seiten parallel zum Boden, entweder in Bodennähe oder in der Nähe der Oberkante einer Rücksitzlehne verläuft. Bei einer solchen Ausgestaltung genügen z.B. vier Befestigungspunkte an den Vertikalholmen zu beiden Seiten des Fahrzeuges, welche die Eckpunkte eines solchen Trapezes definieren.

In der bevorzugten Ausführungsform ist das Spannungselement ein Band oder Seil aus einem gummielastischen Material mit hoher Zugfestigkeit und vorzugsweise großem Elastizitätsmodul, z. B. einem entsprechenden Kunststoffmaterial. Wahlweise kann das Spannungselement jedoch auch ein Stahlseil oder -band sein.

Die Befestigungseinrichtungen an den Befestigungspunkten sind typischerweise starre Elemente mit Führungsösen oder Führungsrollen für das Spannungselement. Die Befestigungseinrichtungen können auch mehrgliedrige Teile sein, wobei eines der Glieder fest an einem Fahrzeugholm oder einem anderen starr mit der Karosserie verbundenen Teil des Fahrzeuges befestigt ist, während das andere Glied z.B. einfach eine Führungsöse sein kann.

Weiterhin ist eine Ausführungsform der Erfindung bevorzugt, bei welcher die Befestigungseinrichtungen plastisch deformierbare Absorbierelemente zur Aufnahme von Lastspitzen in Unfallsituationen haben. Hierdurch kann man verhindern, daß beim Auftreten von Lastspitzen, wenn beispielsweise ein 10 kg schwerer oder noch schwererer Gegenstand bei einem Auffahrunfall von dem Netz aufgefangen wird, das Netz oder das Spannungselement reißen, so daß stattdessen die Absorbierelemente ein Stück weit nachgeben und somit den Verlauf der Belastungskurve etwas glätten, auch wenn dadurch der Gegenstand sich etwas weiter in den vorderen, abgeteilten Raum des Fahrzeuges bewegen kann.

Zweckmäßig erscheint es außerdem, wenn die Befestigungseinrichtungen abnehmbar, jedoch an starr mit der Fahrzeugkarosserie verbundenen Teilen verriegelbar sind. Man kann dann auch die Befestigungseinrichtungen bei der Demontage des Netzes entfernen, die ansonsten möglicherweise stören würden.

Vorzugsweise besteht das Spannungselement aus einem Stück und läuft in einer mehr oder weniger geschlossenen Bahn zumindest teilweise in der Nähe der Außenkontur des zu spannenden Netzes oder Gitters um.

Anstelle der bereits erwähnten Aufwickelvorrichtung als Zugspannungsvorrichtung ist es zur Erhöhung der Zugspannung in dem Spannungselement auch möglich, dieses zwangsweise entlang eines Umweges zu führen. In einer bevorzugten Variante einer solchen Umwegführung, bei welcher die Unterkante des Netzes, entlang welcher auch das Zugspannungselement verläuft, sich im Abstand zum Boden des Fahrzeuges befindet, können beispielsweise Verankerungseinrichtungen am Boden vorgesehen sein und es werden dann mit Hilfe geeigneter Zugspannungselemente ein oder mehrere U-förmige Schlaufen des Spannungselementes nach unten in Richtung des Bodens gezogen. Außerhalb dieser U-förmigen Schlaufen sollten dann allerdings die Netzhalterungen im Bereich dieser Unterkante starre, horizontale Führungen aufweisen. Dabei wird ein erheblicher Teil der Zugspannung auch von dem Netz selbst getragen, so daß dieses insgesamt sehr straff und wenig nachgiebig in seiner Position gehalten wird.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:
- Figur 1: eine Teilquerschnittsansicht eines Fahrzeuges von vorn oder hinten mit einem eingespannten Netz,
- Figur 2: Einzelheiten der in Figur 1 pauschal mit 2 bezeichneten Zugspannungsvorrichtung,
- Figur 3: im Detail eine der Befestigungsvorrichtungen 4 in den Eckpunkten des Netzes gemäß Figur 1,
- Figur 4: einen Abschnitt einer Netzhalterung und deren Verbindung mit einem Spannungselement,
- Figur 5: eine alternative Ausführungsform einer Zugspannungseinrichtung, beispielsweise für die Spannung von U-förmigen Schlaufen,
- Figur 6: einen Vollquerschnitt eines Fahrzeuginnenraumes mit einer zweiten Variante der Spannungserzeugung in dem Spannungselement 3,
- Figur 7: Einzelheiten einer Variante der Netzhalterungen mit einem zusätzlichen Führungsrohr zur Aufnahme des Spannungselementes,
- Figur 8: eine weitere Variante der Verbindung zwischen Netz, Netzhalterung und Spannungselement,
- Figur 9: eine perspektivische Ansicht einer Spanneinrichtung ähnlich Figur 5, beispielsweise zum Erzeugen der U-förmigen Schlaufen in Figur 6,
- Figur 10: nochmals eine Variante ähnlich Figur 6, jedoch mit nur zwei Befestigungseinrichtungen im oberen Bereich des Fahrzeuges und
- Figur 11: eine weitere Variante mit einem Versteifungselement in dem gespannten Netz.

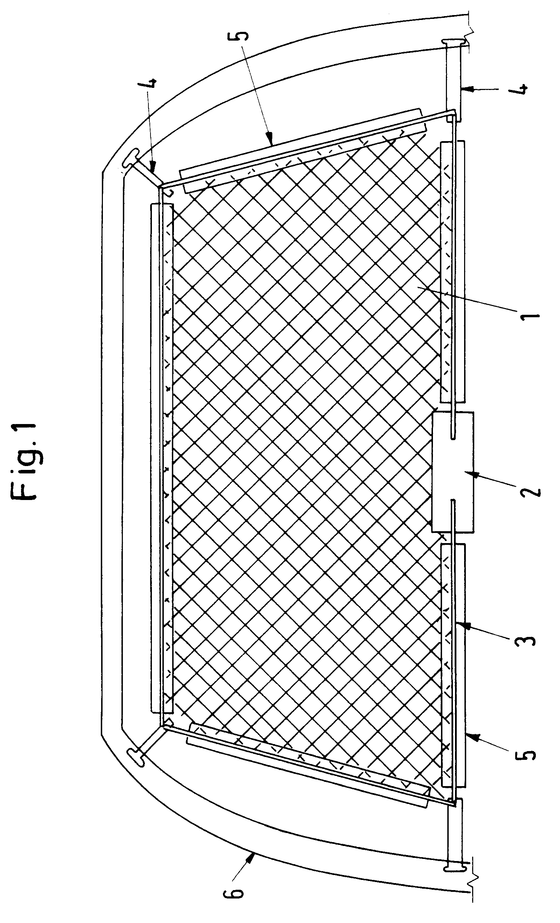

Figur 1 zeigt ein Netz 1, montiert an den Holmen 6 eines Fahrzeuges mit Hilfe von Befestigungseinrichtungen 4 sowie dem Spannelement 3 und der Spanneinrichtung 2. In der einfachsten Variante der Erfindung sind beispielsweise die Befestigungseinrichtungen 4 jeweils starr an der Karosserie bzw. an den Holmen 6 des Fahrzeuges befstigte Bügel mit einer Führungsöse, wobei ein seilförmiges Spannelement 3, ausgehend von der Spannvorrichtung 2 durch alle vier Ösen hindurch und wieder zurück zu der Spannvorrichtung 2 verläuft. Dabei spannt das Spannelement 3 einen trapezförmigen Rahmen auf, dessen Eckpunkte durch die Ösen der Befestigungsbügel 4 definiert sind. Zwischen je zwei benachbarten Befestigungsbügeln 4 verläuft das Seil 3 durch Netzhalterungen 5. Dies können z.B. rohrförmige Führungen sein, durch welche das Seil 3 in Längsrichtung hindurch verläuft und an welchen gleichzeitig je eine Seitenkante des Netzes 1 fest angebracht ist. An der Unterkante des Netzes 1 ist die entsprechende Netzhalterung 5 geteilt, um dazwischen in der Mitte die Spannvorrichtung 2 aufnehmen zu können. Es versteht sich, daß zu Beginn, wenn beispielsweise das Seil 3 noch nicht gespannt ist und sehr locker hängt, man das Seil 3 an seinen freiliegenden Bereichen zwischen den Netzhalterungen 5 ohne weiteres in die Ösen der Befestigungsbügel 4 einhängen kann, wobei vorausgesetzt ist, daß diese Ösen in irgendeiner Weise zugänglich sind, beispielsweise eine Labyrinth- oder Meanderzuführung aufweisen oder in Form von Karabinerhaken oder dergleichen vorliegen, so daß das Seil nicht eingefädelt werden muß. Das Seil kann dann beispielsweise noch so lose sein, daß es ausgehend vom Netz 1 jeweils in Form einer U-förmigen Schlaufe sich zu dem jeweiligen Befestigungsbügel 4 erstreckt. Diese Schlaufen werden jedoch beseitigt, indem nunmehr das Seil 3 mit Hilfe der Spannvorrichtung 2 zunehmend straff gespannt wird, so daß sich schließlich der in Figur 1 dargestellte Zustand einstellt. Dabei ist es im übrigen vorteilhaft, wenn die Netzhalterungen 5 im wesentlichen starre Elemente sind, da dann auch das Netz über die gesamte Fläche hinweg noch stärker gestrafft wird.

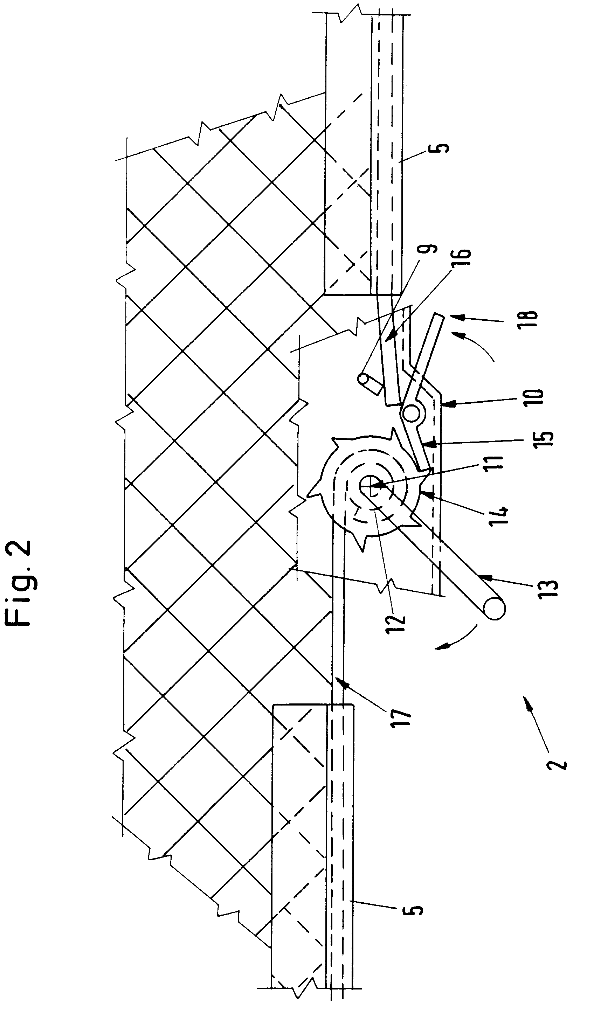

Figur 2 zeigt Einzelheiten der Spannvorrichtung 2. In einem Gehäuse 10 erkennt man eine Wickelwelle 12, die mit einer an der Achse 11 befestigten Kurbel 13 in der an der Kurbel angegebenen Pfeilrichtung gedreht werden kann. Dabei wird das Ende 17 des Seiles 3 auf die Wickelwelle 12 aufgewickelt. Am Ende der Wickelwelle 12 und axial verschoben zu dem Wickelbereich erkennt man ein asymmetrisch verzahntes Ratschenrad 14, welches mit einer schwenkbar gelagerten Klinke 15 in Eingriff steht. Die Klinke 15 ist in Eingriffsrichtung mit dem Ratschenrad 14 federnd vorgespannt. Beim Drehen der Kurbel 13 in der angegebenen Pfeilrichtung gleitet die Klinke 15 auf der Rückseite der Flanken der Zähne des Ratschenrades 14 auf und springt zurück in Eingriff mit dem Zahn, sobald die betreffende Zahnspitze das Ende der Klinke 15 passiert hat. Man kann also die Kurbel 13 ohne weiteres loslassen, ohne daß das Seil 3 bzw. das Seilende 17 von der Wickelwelle 12 durch deren Rückwärtsdrehung abgewickelt wird, weil die Rückwärtsdrehung mit Hilfe des Ratschenrades 14 und der eingreifenden Klinke 15 verhindert, bzw. um maximal einen Zahnabstand zugelassen wird.

Die Klinke 15 ist jedoch als doppelarmiger Hebel ausgebildet, dessen zweites Ende 18 aus dem Gehäuse 10 herausragt. Auf diese Weise ist es möglich, die Klinke 15 durch Druck auf das Hebelende 18 außer Eingriff mit den Zähnen des Ratschenrades 14 zu bringen, so daß die Wickelwelle 12 frei in Rückwärtsrichtung drehbar ist. Beim Betätigen des Hebels 18 wird jedoch tunlichst der Griff der Kurbel 13 zunächst festgehalten, damit das Abwickeln kontrolliert erfolgt. Im übrigen versteht es sich, daß die Darstellung in Figur 2 rein schematisch ist und daß die konkrete Ausführung, insbesondere hinsichtlich der Maßstabverhältnisse und Abmessungen, deutlich hiervon abweichen kann.

Das zweite Ende 16 des Seiles 3 ist im übrigen von der anderen Seite der Spannvorrichtung 2 her mit Hilfe einer Klemmvorrichtung 9 befestigt, die hier ebenfalls nur schematisch angedeutet ist.

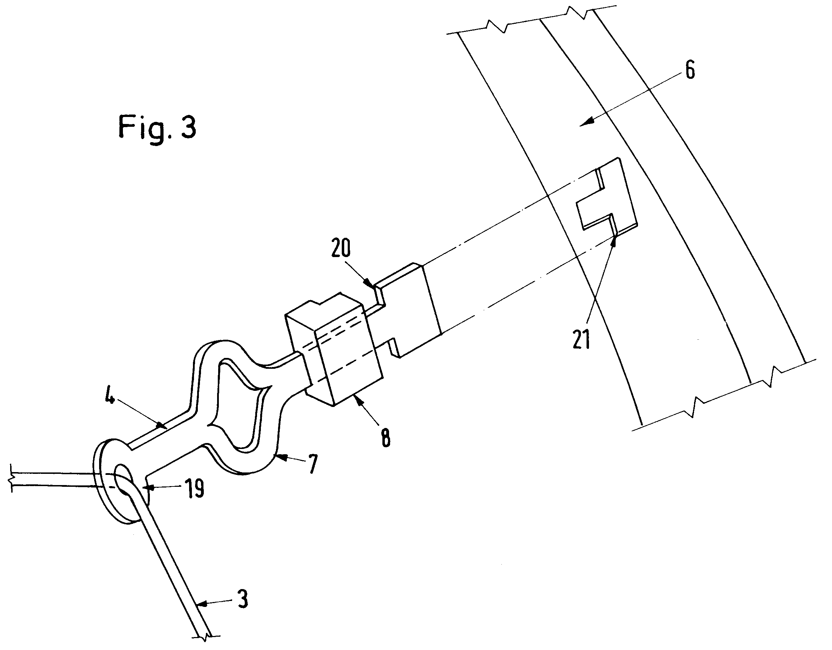

Figur 3 zeigt eine Ausführungsform, bei welcher die Befestigungseinrichtung 4 aus einem festen, starren Material, vorzugsweise aus einem Stahlstreifen besteht und im allgemeinen dauerhaft mit dem Seil bzw. Spannelement 3 verbunden bleibt, so daß zur Montage und Demontage jeweils der Befestigungsstreifen 4 an entsprechenden Vorrichtungen 21 im Fahrzeug befestigt wird. Der Metallstreifen 4 weist zunächst eine Öse 19 auf, durch welche das Seil 3 geführt ist, wobei in der Öse 19 ohne weiteres auch eine Führungsrolle angeordnet sein könnte, um die Bewegung des Seiles 3 durch die Öse 19 insbesondere während des Spannens zu erleichtern. Das andere Ende 20 des Streifens 4 ist T-förmig ausgebildet und zwar so, daß es in eine Aussparung 21 paßt, die in einen Fahrzeugholm 6 oder in ein an dem Holm 6 befestigtes Teil eingebracht ist. Die Darstellung in Figur 3 ist auch hier wieder nur sehr schematisch, ohne die genaue Funktion der Verbindung der Teile 20, 21 darzustellen, jedoch ist diese Art der Verbindung im Stand der Technik allgemein bekannt und bedarf deshalb keiner näheren Erläuterung.

Ein federnd vorgespanntes Sicherungselement 8 sorgt außerdem dafür, daß, nachdem die Elemente 20, 21 miteinander in Eingriff gebracht sind, diese nicht wieder von selbst außer Eingriff treten können. Nachdem beispielsweise das T-förmige Teil 20 passend in die Aussparung 21 eingesetzt worden ist, schiebt sich unter der Wirkung der federnden Vorspannung das zunächst zurückgehaltene Teil 8 über die Verbindungsstelle hinweg, hintergreift dabei mit einem zweiten, U-förmig umgebogenen Ende den Holm 6 oder dergleichen und verhindert durch die Überdeckung der Verbindungsstelle, daß das Teil 20 aus der Aussparung 21 herausgerückt wird.

In einem mittleren Bereich ist der Metallstreifen 4 in Längsrichtung geschlitzt und in dem geschlitzten Bereich zu einer Öse 7 aufgestaucht worden. Dieser Abschnitt erhält dadurch die Funktion eines Absorbierelementes für Lastspitzen. Wird nämlich eine übermäßig große Zugspannung auf das Seil 3 und damit auch auf den Befestigungsstreifen 4 ausgeübt, so beginnt das Element 4 bei Überschreiten eines durch die Ausgestaltung des Absorbierelementes 7 vorgebbaren Grenzwertes, sich zu strecken, wobei die Öse 7 sich allmählich wieder in Richtung des ursprünglichen Schlitzes verjüngt.

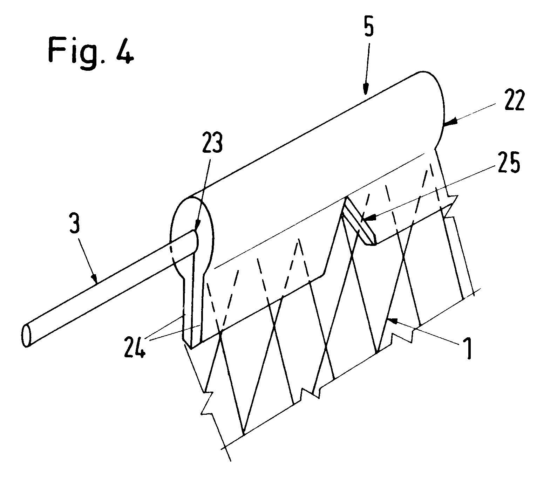

Figur 4 zeigt in einer vergrößerten perspektivischen Darstellung schematisch eine Netzhalterung 5. Die Netzhalterung 5 besteht danach aus einem U-förmig zusammengeklappten Streifen, z.B. aus Kunststoffmaterial, wobei eine Kante des Netzes 1 zwischen den beiden Schenkeln 24 dieses U-förmig zusammengelegten Streifens eingeklemmt wird. In diesem Bereich werden die Schenkel 24 dann zusammengepreßt und aneinander befestigt, z.B. miteinander verschweißt, wobei eine feste Verbindung zwischen dem Netz 1 und der Netzhalterung 5 entsteht. In der Nähe der Basis der U-förmig zusammengelegten Schenke 24 verläuft das Seil 3 durch eine Aussparung 23 und ist in Längsrichtung durch die Aussparung 23 hindurch bewegbar. Dies kann man beispielsweise dadurch sicherstellen, daß vor dem U-förmigen Zusammenlegen des Streifens 22 entsprechende Nuten oder Auskehlungen vorgesehen werden.

Um die Flexibilität des mehr oder weniger starren Streifens 22 zu verbessern, können in den Schenkeln 24 Aussparungen 25 z.B. in der dargestellten V-Form vorgesehen werden, so daß der Streifen 22 hierdurch leichter biegbar wird, um z.B. die Montage und das Verstauen der Rückhaltevorrichtung zu erleichtern.

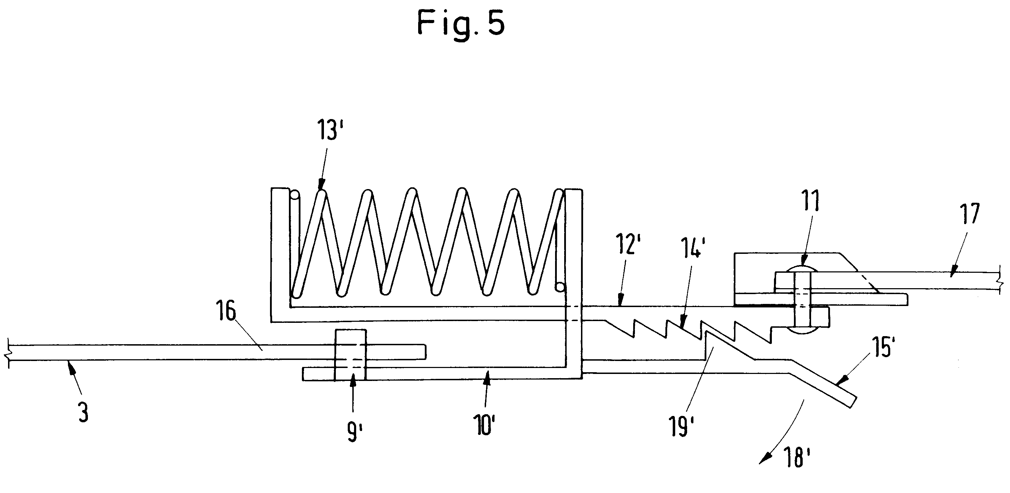

In Figur 5 erkennt man schematisch im Schnitt eine alternative Spannvorrichtung. Die Spannvorrichtung besteht hier im wesentlichen aus zwei relativ zueinander bewegbaren und federnd gegeneinander vorgespannten Teilen 10', 12'. Jedes der Teile 10', 12' ist mit einem Ende 16 bzw. 17 des Seiles 3 fest verbunden. Die Teile 10', 12' sind näherungsweise L-förmig, wobei je einer ihrer L-Schenkel parallel zu dem des anderen ausgerichtet ist, so daß zwischen den beiden sich senkrecht dazu erstreckenden L-Schenkeln eine Feder 13' aufnehmbar ist. Es versteht sich, daß daneben auch Halterungs- und Führungselemente vorgesehen sind, die in Figur 5 nicht dargestellt sind und die ein seitliches Verkanten oder Auseinanderrutschen der Teile 10', 12' verhindern. Zusätzlich ist der eine der parallelen L-Schenkel mit einer Verzahnung 14' versehen, während der andere, hierzu parallele L-Schenkel über den Querschenkel hinaus zu der Verzahnung hin verlängert ist durch einen Federbügel 15', der einen Eingriffszahn 19' aufweist. Der Federbügel 15' kann von Hand durch Drücken in Richtung des Pfeiles 18' außer Eingriff gebracht werden, wobei dann die Feder 13 eine minimale Zugspannung in dem Seil 3 gewährleistet. Unter Erhöhung der Zugspannung in dem Seil 3 können jedoch die beiden Teile 10', 12' in Längsrichtung gegeneinander verschoben werden, wobei der Zahn 19' schrittweise in der asymmetrischen Verzahnung 14' weitergleitet und an einer gewünschten Position verrastet. Es versteht sich, daß hier der Verstellweg auf die Länge der Verzahnung 14' begrenzt ist, die allerdings deutlich größer sein kann, als in der lediglich schematischen Figur 5 angedeutet. Eine solche Variante einer Spannvorrichtung könnte jedoch dafür geeignet sein, beispielsweise ein Stahlseil 3 hinreichend zu spannen.

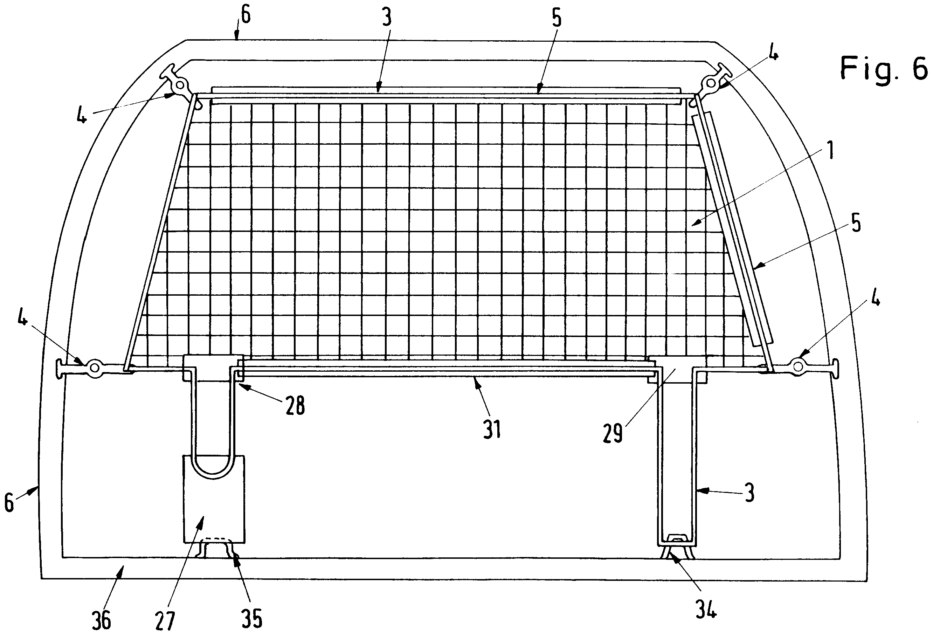

Figur 6 zeigt eine Variante der Erfindung, bei welcher zur Erhöhung der Zugspannung das Seil 3 zwangsweise entlang eines U-förmigen Umweges geführt wird. Man erkennt wiederum die Fahrzeugkarosserie bzw. die Holme 6 mit vier streifenförmigen Befestigungseinrichtungen 4, die das Seil 3 und damit auch das Netz 1 trapezförmig aufspannen. Zusätzlich sind am Boden 36 des Fahrzeuges Befestigungsbügel 34, 35 mit mindestens einer Zugspannvorrichtung 27 zu erkennen, die im Beispiel der Figur 6 nur links zwischen dem Seil 3 und dem Befestigungsbügel 35 dargestellt ist, jedoch in ähnlicher Weise auch zwischen dem Befestigungsbügel 34 und dem Seil 3 vorgesehen werden kann. Es ist allerdings auch möglich, daß zunächst die U-förmige Schlaufe des Seiles 3 am Befestigungsbügel 34 zunächst von Hand gespannt wird und daß erst anschließend, wenn zum Spannen eine größere Kraft erforderlich wird, die Spannvorrichtung 27 am linken Befestigungsbügel 35 benutzt wird. Die untere Netzhalterung 31 weist zwei Aussparungen 28, 29 auf, entlang welcher die rohrförmige Führung 23 in der Netzhalterung 5, wie sie beispielsweise in Figur 4 dargestellt ist, nach außen unterbrochen ist, so daß das Seil 3 in diesem Bereich erfaßt und nach außen zur Bildung der U-förmigen Schlaufen weggezogen werden kann. Die untere Netzhalterung 31 kann aber im übrigen, auch wenn dies in Figur 6 nicht dargestellt ist, durchgehend bis kurz vor die unteren Eckpunkte des aufgespannten Trapezes vorgesehen sein.

Durch Herabziehen der U-förmigen Schlaufen mit Hilfe einer Spannvorrichtung 27, wie links in Figur 6 dargestellt, wird nicht nur die Zugspannung in dem Seil 3 erhöht und damit der Rahmen des aufgespannten Trapezes versteift, sondern diese Zugkräfte werden auch zusätzlich über die Netzhalterung 31 auf das gesamte Netz 1 übertragen, welches daher ebenfalls als Ganzes nach unten herabgezogen und damit straff gespannt wird. Die Befestigungseinrichtungen 4 und die Netzhalterungen 5, 31 sorgen dabei dafür, daß das Netz 1 insgesamt seine den oberen Bereich des Fahrzeugquerschnittes im wesentlichen ausfüllende Form behält.

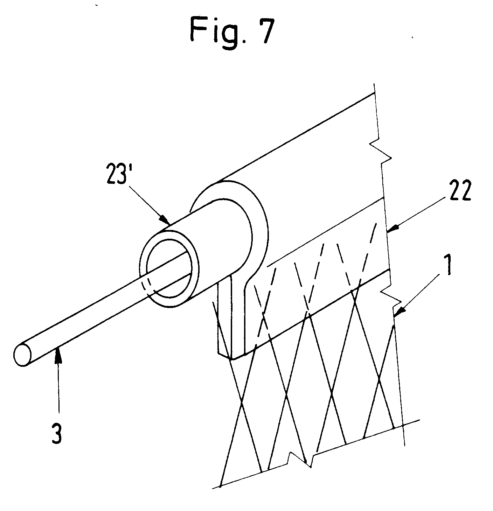

In Figur 7 ist noch eine alternative Variante einer Netzhalterung mit einem von den U-förmig zusammengelegten Schenkeln des Streifens 22 umfaßten Führungsrohr 23' dargestellt.

Ansonsten entspricht diese Ausführungsform im wesentlichen der bereits im Zusammenhang mit Figur 4 beschriebenen Ausgestaltung.

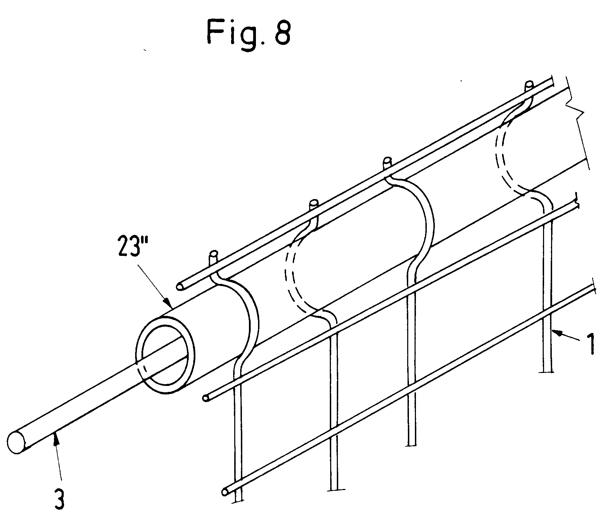

Figur 8 zeigt eine weitere Variante einer Netzhalterung, die im wesentlichen aus einem Führungsrohr 23'' besteht, welches in die äußeren Maschen der Netzkante eingewoben oder eingesteckt ist und zwar so, daß abwechselnd von verschiedenen Seiten die benachbarten Maschen der äußeren Maschenreihe des Netzes 1 durchläuft.

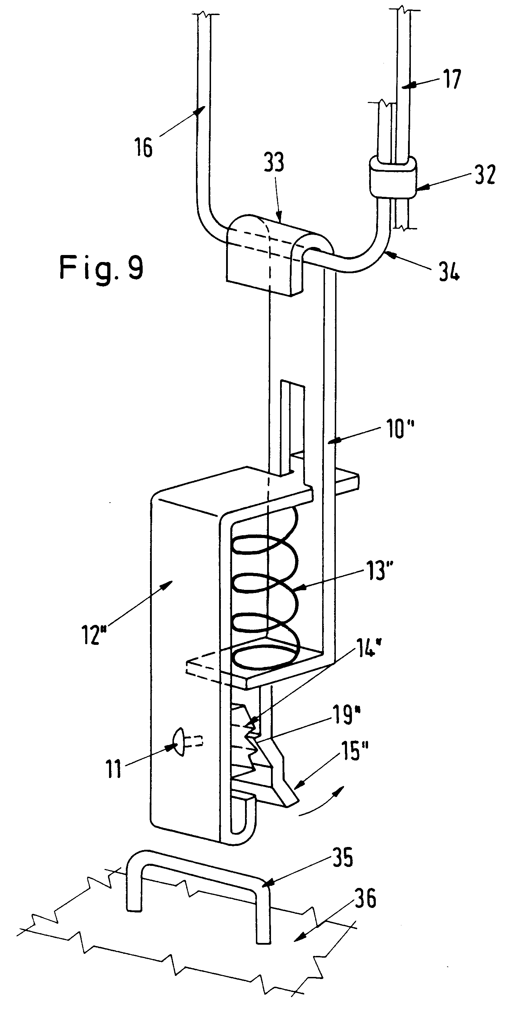

Figur 9 zeigt eine Spannvorrichtung, wie sie beispielsweise als Spannvorrichtung 27 bei der Ausführungsform gemäß Figur 6 verwendet werden könnte und die der in Verbindung mit Figur 5 beschriebenen Variante sehr ähnlich ist mit Ausnahme der Tatsache, daß nicht die beiden Enden 16, 17 des Seiles mit den Elementen 10'' und 12'' verbunden sind, sondern daß ein Ende 33 des Schenkels des Elementes 10'' hakenförmig die von dem Seil 3 gebildete Schlaufe erfaßt, während das hakenförmige Ende des Teiles 12'' einen am Boden 36 des Fahrzeuges verankerten Befestigungsbügel 35 umgreift. Im übrigen entsprechen die mit denselben Bezugszahlen wie in Figur 5, jedoch mit zusätzlichen zwei Strichen versehenen Teile genau den im Zusammenhang mit Figur 5 beschriebenen Teilen.

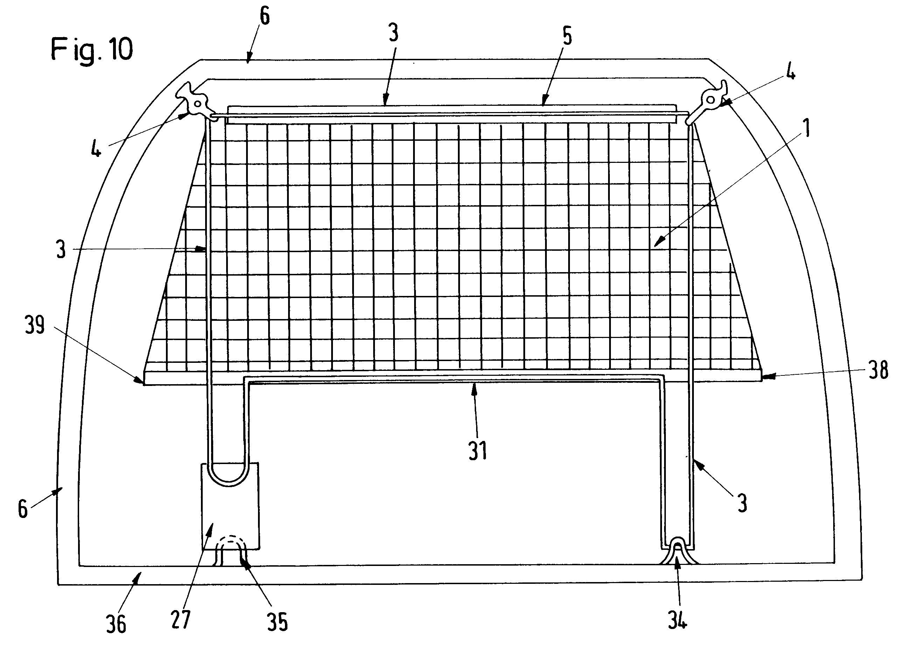

Figur 10 zeigt nochmals eine der Figur 6 sehr ähnliche Variante, wobei jedoch auf die zwei mittleren Befestigungsstreifen 4 rechts und links an den Holmen 6 verzichtet worden ist, während das untere Halterungselement 31 bei dieser Variante auf jeden Fall durchgehend zwischen den rechten und linken Enden 38, 39 ausgebildet ist und auch möglichst steif ausgeführt ist, um die Trapezform des Netzes aufrechtzuerhalten. Das Herstellen der U-förmigen Schlaufen des Seiles 3 entspricht auch hier wiederum genau dem in Verbindung mit Figur 6 beschriebenen Vorgang. Ein Unterschied besteht lediglich darin, daß der eine Schenkel der U-förmigen Schlaufen des Seiles 3 jeweils bis zu einem der oberen Befestigungsstreifen 4 hinaufführt und nicht entlang der Außenkontur des Netzes 1 verläuft, während der zweite Schenkel der U-förmigen Schlaufen des Seiles 3 nach wie vor an dem unteren Halterungselement 31' endet und damit auch die Ausübung einer Spannkraft auf das Netz 1 insgesamt sicherstellt.

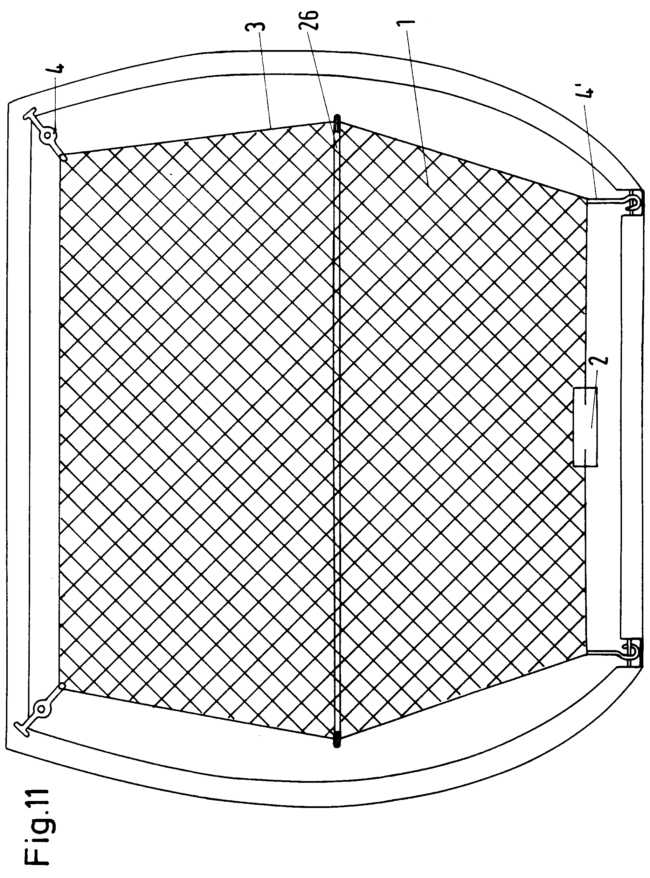

Bei bestimmten Fahrzeugtypen kann die Breite des Innenraumes zwischen Boden und Dach beträchtlich variieren, was dazu führen könnte, daß ein jeweils in den Eckübergängen Boden/Seitenwand bzw. Dach/Seitenwand befestigtes Netz beträchtliche Lücken zwischen Seitenwand und Netzrand freiläßt. Für solche Anwendungsfälle ist eine Ausführungsform gedacht, wie sie beispielsweise in Figur 11 dargestellt ist. Bei dieser Ausführungsform werden zwei voneinander beabstandete, in diesem Fall gegenüberliegende, Abschnitte des Spannelementes durch ein Versteifungselement 26 auseinandergehalten. Generell können beliebige voneinander beabstandete und nicht entlang derselben geraden Linie verlaufende Abschnitte des Spannelementes durch derartige Versteifungselemente 26 auseinandergehalten werden. Auf diese Weise kann man den Verlauf des Netzrandes den Konturen eines Fahrzeuginnenraumes hinreichend genau anpassen, so daß die verbleibenden Lücken zwischen Netzrand und Seitenwand oder zwischen Netzrand und Dach oder Boden des Fahrzeuges ein bestimmtes, vorgebbares Maximalmaß nicht überschreiten. In diesem Zusammenhang kann darauf hingewiesen werden, daß auch schon bei der Ausführungsform gemäß Figur 10 das Rohr 31 mit den Endabschnitten 38, 39 ein entsprechendes Versteifungselement darstellt, welches sich in diesem Fall nicht zwischen gegenüberliegenden Abschnitten des Spannelementes, sondern bis zu gegenüberliegenden Rändern des Netzes erstreckt.

Die erfindungsgemäße Rückhaltevorrichtung verbindet die einfache Montagemöglichkeit und Staumöglichkeit der bekannten, einfachen Netzabtrennungen mit der hohen Rückhaltefähigkeit einer starren Vorrichtung, die jedoch nach dem Stand der Technik nur umständlich montierbar waren.

### Bezugszeichenliste

- 1: Netz
- 2: Spanneinrichtung
- 3: Seil, Spannelement
- 4: Metallstreifen, Befestigungseinrichtungen, Befestigungsbügel
- 5: Netzhalterung
- 6: Holme
- 7: Öse, Absorbierelement
- 8: Sicherungselement
- 9: Klemmvorrichtung
- 10: Gehäuse
- 10', 12': Teile
- 10'', 12'': Elemente
- 11: Achse
- 12: Wickelwelle
- 13: Kurbel, Feder
- 13': Feder
- 14: Ratschenrad
- 14': Verzahnung
- 15: Klinke
- 15': Federbügel
- 16, 17: Seilenden
- 18: Hebelende
- 18': Pfeil
- 19: Öse
- 19': Eingriffszahn
- 20: Ende des Streifens 4
- 21: Aussparung
- 22: Streifen
- 23: Führung, Aussparung
- 23': Führungsrohr
- 23'': Führungsrohr
- 24: Schenkel
- 25: Aussparungen
- 26: Versteifungselement
- 27: Zugspannvorrichtung
- 28, 29: Aussparungen
- 31: Rohr, Netzhalterung
- 31': Halterungselement
- 33: Ende des Schenkels des Elementes 10''
- 34, 35: Befestigungsbügel
- 36: Boden
- 38, 39: Endabschnitte

## Patentansprüche

1. Rückhaltevorrichtung für in einem Fahrzeug lose verstaute Gegenstände, bestehend aus einem gitter- bzw. netzartigen, eine Rückhaltefläche definierenden Element (1) und Befestigungseinrichtungen (4) für das Gitter- bzw. Netzelement (1) an dem Fahrzeug, wobei ein einer Zugspannung aussetzbares, mindestens teilweise durch die Befestigungseinrichtungen (4) geführtes, flexibles und im wesentlichen lineares Spannelement (3) sowie eine Zugspannungseinrichtung (2) vorgesehen sind, **dadurch gekennzeichnet,** daß an dem Spannelement (3) Halterungen (5) für das Gitter- bzw. Netzelement (1) angebracht sind, wobei mit Hilfe der Zugspannungseinrichtung (2) die Zugspannung in dem Spannelement (3) auf einen gewünschten Wert gesteigert oder, z.B. zwecks Demontage, vermindert werden kann.

2. Rückhaltevorrichtung nach Anspruch 1, dadurch gekennzeichnet, daß das Spannelement (3) in Längsrichtung zu den Netzhalterungen (5) bewegbar ist.

3. Rückhaltevorrichtung nach Anspruch 2, dadurch gekennzeichnet, daß die Netzhalterungen (5) rohnförmige Führungsöffnungen (23) für das Spannelement (3) aufweisen.

4. Rückhaltevorrichtung nach einem der Ansprüche 1 bis 3, dadurch gekennzeichnet, daß die Zugspannungsvorrichtung (2) eine Wickeleinrichtung (11, 12, 13) mit einem Ratschenmechanismus (14, 15) aufweist.

5. Rückhaltevorrichtung nach einem der Ansprüche 1 bis 4, dadurch gekennzeichnet, daß das Spannelement zumindest überwiegend entlang der Außenkonturen des Gitter- bzw. Netzelementes (1) verläuft.

6. Rückhaltevorrichtung nach einem der Ansprüche 1 bis 5, dadurch gekennzeichnet, daß die Außenkonturen des Gitter- oder Netzelementes (1) trapezförmig verlaufen.

7. Rückhaltevorrichtung nach einem der Ansprüche 1 bis 6, dadurch gekennzeichnet, daß das Spannelement ein Seil aus einem gummielastischen Material ist.

8. Rückhaltevorrichtung nach einem der Ansprüche 1 bis 6, dadurch gekennzeichnet, daß das Spannelement ein Stahlseil oder -band ist.

9. Rückhaltevorrichtung nach einem der Ansprüche 1 bis 8, dadurch gekennzeichnet, daß die Befestigungseinrichtungen (4) im wesentlichen starre Elemente mit Führungsösen (19) oder -rollen für das Spannelement (3) sind.

10. Rückhaltevorrichtung nach einem der Ansprüche 1 bis 9, dadurch gekennzeichnet, daß die Befestigungseinrichtungen (4) plastisch deformierbare Absorbierelemente (7) zur Aufnahme von Lastspitzen aufweisen.

11. Rückhaltevorrichtung nach einem der Ansprüche 1 bis 10, dadurch gekennzeichnet, daß die Befestigungseinrichtungen an starr mit der Fahrzeugkarosserie verbundenen Teilen (21) verriegelbar sind.

12. Rückhaltevorrichtung nach einem der Ansprüche 1 bis 11, dadurch gekennzeichnet, daß das Spannelement (3) aus einem einstückigen, in der Nähe des äußeren Randes des gitter-bzw. netzartigen Elementes umlaufenden Teil besteht.

13. Rückhaltevorrichtung nach einem der Ansprüche 1 bis 12, dadurch gekennzeichnet, daß die Zugspannungseinrichtung (2) eine Umwegführung (35, 27, 28, 31) für das Spannelement (3) ist.

14. Rückhaltevorrichtung nach Anspruch 13, dadurch gekennzeichnet, daß die Unterkante des Gitter- bzw. Netzelementes (1) einen Abstand zum Boden des Fahrzeuges aufweist und daß Spanneinrichtungen (35, 27) vorgesehen sind, durch welche das Spannelement (3) in Form einer U-förmigen Schlaufe von der Netzunterkante in Richtung des Fahrzeugbodens gezogen wird.

15. Rückhaltevorrichtung nach einem der Ansprüche 1 bis 14, dadurch gekennzeichnet, daß sie mindestens ein Versteifungselement (26) aufweist, welches sich zwischen voneinander beabstandeten und nicht entlang derselben geraden Linie verlaufenden Abschnitten des Spannelementes (3) und/oder des Randes des Gitter- bzw. Netzelementes (1) erstreckt und diese Abschnitte auf dem durch das Versteifungselement (26) vorgegebenen Abstand hält.

## Claims

1. A restraining device for items which are stowed loosely in a vehicle, comprising a grill-like or mesh-like element (1) defining a restraining surface, and fixing devices (4) for fixing the grill or mesh element (1) to the vehicle, wherein there are provided a flexible and substantially linear bracing element (3) which can be subjected to a tensile force and which is passed at least partially through the fixing devices (4), and a tensioning device (2), characterised in that disposed on the bracing element (3) are holders (5) for the grill or mesh element (1), wherein the tensile force in the bracing element (3) can be increased to a desired value or reduced for example for the purposes of dismantling, by means of the tensioning device (2).

2. A restraining device according to claim 1 characterised in that the bracing element (3) is movable in the longitudinal direction relative to the mesh holders (5).

3. A restraining device according to claim 2 characterised in that the mesh holders (5) have tubular guide openings (23) for the bracing element (3).

4. A restraining device according to one of claims 1 to 3 characterised in that the tensioning device (2) has a winding device (11, 12, 13) with a ratchet mechanism (14, 15).

5. A restraining device according to one of claims 1 to 4 characterized in that the bracing element extends at least predominantly along the outside contours of the grill or mesh element (1).

6. A restraining device according to one of claims 1 to 5 characterised in that the outside contours of the grill or mesh element (1) extend in a trapezoidal configuration.

7. A restraining device according to one of claims 1 to 6 characterised in that the bracing element is a cable comprising a resilient material.

8. A restraining device according to one of claims 1 to 6 characterized in that the bracing element is a steel cable or strip.

9. A restraining device according to one of claims 1 to 8 characterized in that the fixing devices (4) are substantially rigid elements with guide eyes (19) or rollers for the bracing element (3).

10. A restraining device according to one of claims 1 to 9 characterized in that the fixing devices (4) have plastically deformable absorbing elements (7) for carrying load peaks.

11. A restraining device according to one of claims 1 to 10 characterized in that the fixing devices are lockable to parts (21) rigidly connected to the vehicle body.

12. A restraining device according to one of claims 1 to 11 characterized in that the bracing element (3) comprises a one-piece portion extending around the grill-like or mesh-like element in the proximity of the outer edge thereof.

13. A restraining device according to one of claims 1 to 12 characterized in that the tensioning device (2) is a detour-route guide means (35, 27, 28, 31) for the bracing element (3).

14. A restraining device according to claim 13 characterized in that the lower edge of the grill or mesh element (1) is at a spacing relative to the floor of the vehicle and that there are provided tensioning devices (35, 27) through which the bracing element (3) is drawn in the form of a U-shaped loop from the lower edge of the mesh in the direction of the vehicle floor.

15. A restraining device according to one of claims 1 to 14 characterized in that it has at least one stiffening element (26) which extends between portions of the bracing element (3) and/or the edge of the grill or mesh element (1), which portions are spaced from each other and do not extend along the same straight line, and the stiffening element holds said portions at the spacing predetermined by the stiffening element (26).

## Revendications

1. Système de retenue pour des objets logés d'une manière lâche dans un véhicule, constitué d'un élément (1), en forme de grille ou de filet, définissant une surface de retenue, et de dispositifs de fixation (4), disposés contre le véhicule et destinés à l'élément (1) en forme de grille ou de filet, où on prévoit un élément de serrage (3), pouvant être exposé à une contrainte de traction, guidé au moins partiellement à travers les dispositifs de fixation (4), souples et essentiellement linéaires, ainsi qu'un dispositif (2) pour appliquer une contrainte de traction, caractérisé en ce que des attaches (5) destinées à l'élément en forme de grille ou de filet (1) sont rapportées à l'élément de serrage (3), la contrainte de traction dans l'élément de serrage (3) pouvant, à l'aide du dispositif (2) destiné à appliquer une contrainte de traction, être augmentée à une valeur voulue, ou encore diminuée, par exemple pour permettre un démontage.

2. Système de retenue selon la revendication 1, caractérisé en ce que l'élément de serrage (3) est mobile dans la direction longitudinale par rapport aux attaches (5) destinées au filet.

3. Système de retenue selon la revendication 2, caractérisé en ce que les attaches (5) destinées au filet comportent des ouvertures de guidage tubulaires (23) pour l'élément de serrage (3).

4. Système de retenue selon l'une des revendications 1 à 3, caractérisé en ce que le dispositif (2) destiné à appliquer une contrainte de traction comporte un dispositif d'enroulement (11, 12, 13) comportant un mécanisme à cliquets (14, 15).

5. Système de retenue selon l'une des revendications 1 à 4, caractérisé en ce que l'élément de serrage court au moins dans sa majorité le long des contours extérieurs de l'élément (1) en forme de grille ou de filet.

6. Système de retenue selon l'une des revendications 1 à 5, caractérisé en ce que les contours extérieurs de l'élément (1) en forme de grille ou de filet sont trapézoïdaux.

7. Système de retenue selon l'une des revendications 1 à 6, caractérisé en ce que l'élément de serrage est un câble en un matériau ayant l'élasticité du caoutchouc.

8. Système de retenue selon l'une des revendications 1 à 6, caractérisé en ce que l'élément de serrage est un câble ou une bande en acier.

9. Système de retenue selon l'une des revendications 1 à 8, caractérisé en ce que les dispositifs de fixation (4) sont pour l'essentiel des éléments rigides comportant des oeillets (19) ou des galets de guidage pour l'élément de serrage (3).

10. Système de retenue selon l'une des revendications 1 à 9, caractérisé en ce que les dispositifs de fixation (4) présentent des éléments absorbants (7), pouvant subir une déformation plastique, pour absorber les pointes de charge.

11. Système de retenue selon l'une des revendications 1 à 10, caractérisé en ce que les dispositifs de fixation sont verrouillables contre des pièces (21), liées d'une manière rigide à la carrosserie du véhicule.

12. Système de retenue selon l'une des revendications 1 à 11, caractérisé en ce que l'élément de serrage (3) est constitué d'une pièce monobloc, courant au voisinage du bord extérieur de l'élément en forme de grille ou de filet.

13. Système de retenue selon l'une des revendications 1 à 12, caractérisé en ce que le dispositif (2) destiné à appliquer une contrainte de traction représente un guidage en déviation (35, 27, 28, 31) pour l'élément de serrage (3).

14. Système de retenue selon la revendication 13, caractérisé en ce que l'arête inférieure de l'élément (11) en forme de grille ou de filet se trouve à une certaine distance du plancher du véhicule, et que l'on prévoit des dispositifs de serrage (35, 27) par lesquels l'élément de serrage (3) est tiré sous forme d'une boucle en U, à partir de I'arête inférieure du filet, dans la direction du plancher du véhicule.

15. Système de retenue selon l'une des revendications 1 à 14, caractérisé en ce qu'il comporte au moins un élément de rigidification (26), qui s'étend entre des segments, situés à une certaine distance les uns des autres et ne courant pas le long de la même ligne droite, de l'élément de serrage (3) et/ou du bord de l'élément (1) en forme de grille ou de filet, et maintient ces segments à la distance prédéfinie par l'élément de rigidification (26).
